# EUROPEAN PATENT SPECIFICATION

(11) **EP 2 816 635 B1**
(45) Date of publication and mention of the grant of the patent: **21.09.2016**
(21) Application number: 14172797.4
(22) Date of filing: 17.06.2014
(51) Int. Cl.: H01M 2/16, H01M 4/36, H01M 10/0525, H01M 10/0569, H01M 4/62, H01M 4/13

(54) **Electric storage device and electric storage module**
Elektrische Speichervorrichtung und elektrisches Speichermodul
Module de stockage électrique et dispositif de stockage électrique

(30) Priority: 19.06.2013 JP 2013128945
(43) Date of publication of application: 24.12.2014
(73) Proprietor: GS Yuasa International Ltd., Kisshoin, Minami-ku, Kyoto-shi, Kyoto 601-8520 (JP)
(72) Inventor: Kako, Tomonori, Kyoto, 601-8520 (JP); Mori, Sumio, Kyoto, 601-8520 (JP); Miyazaki, Akihiko, Kyoto, 601-8520 (JP)
(74) Representative: Isarpatent

(56) References cited:
- US-A1- 2004 202 928
- US-A1- 2007 122 694
- US-A1- 2009 092 898
- US-A1- 2012 100 411

## Description

The present invention relates to an electric storage device, and more particularly, to an electric storage device provided with a power generating element including a positive electrode, a negative electrode, and a separator placed between the positive electrode and the negative electrode.

### BACKGROUND

In recent years, rechargeable electric storage devices, e.g. batteries such as lithium ion batteries and nickel-metal hydride batteries and capacitors such as electric double layer capacitors have been adopted as power sources for vehicles such as automobiles and motorcycles, various types of devices such as mobile terminals and laptop computers, etc.

In the case of a rolled-up (wound) power generating element for such an electric storage device, there are techniques for making the separator larger in width than the positive electrode in order to prevent short circuit caused by deviations, etc. The electric storage devices for which such a technique is adopted include, for example, the nonaqueous electrolyte secondary battery disclosed in International Publication WO 98/38688.

This International Publication WO 98/38688 discloses a separator in which at least one of a positive active material layer and a negative active material layer has an end surface that is at least partially coated with an aggregate layer of insulating material particles. In the aggregate layer, insulating material particles are bound to each other with a binder.

Electric storage devices comprising protective layers covering at least one of the side surfaces in a width direction of the positive active material are disclosed in US 2007/0122694 A1. US 2009/0092898 A1 and US 2004/0202928.

### SUMMARY

An object of the present invention is to provide an electric storage device which can suppress performance degradation.

The inventors have focused on the fact that in the case of a separator including an inorganic layer on a separator substrate, a binder constituting the inorganic layer is eluted from the separator to intensively decompose a positive active material at ends of a positive active material layer.

An electric storage device according to an aspect of the present invention includes: a positive electrode; a negative electrode; and a separator placed between the positive electrode and the negative electrode, the positive electrode has a positive electrode substrate, a positive active material layer formed on the positive electrode substrate, and a protective layer that covers at least one of side surfaces in a width direction of the positive active material layer, the negative electrode has a negative electrode substrate and a negative active material layer formed on the negative electrode substrate, and the separator has a separator substrate opposed to the negative active material layer, and an inorganic layer containing a binder, which is formed on the separator substrate and opposed to the positive active material layer. Preferably, the inorganic layer is larger in width than the positive active material layer, and the protective layer is adapted to protect the positive active material layer from a component eluted from the binder.

### BRIEF DESCRIPTION OF THE DRAWINGS

Fig. 1 is a perspective view schematically illustrating a nonaqueous electrolyte secondary battery as an example of an electric storage device according to Embodiment 1 of the present invention;
Fig. 2 is a perspective view schematically illustrating the inside of a container of the nonaqueous electrolyte secondary battery according to Embodiment 1 of the present invention;
Fig. 3 is a cross-sectional view along the line III-III in Fig. 2, schematically illustrating the nonaqueous electrolyte secondary battery according to Embodiment 1 of the present invention;
Fig. 4 is a perspective view schematically illustrating a power generating element of the nonaqueous electrolyte secondary battery according to Embodiment 1 of the present invention;
Fig. 5 is a cross-sectional view along the line V-V in Fig. 4, schematically illustrating the power generating element of the nonaqueous electrolyte secondary battery according to Embodiment 1 of the present invention;
Fig. 6 is a cross-sectional view schematically illustrating a positive electrode of the nonaqueous electrolyte secondary battery according to Embodiment 1 of the present invention;
Fig. 7 is a plan view schematically illustrating the positive electrode of the nonaqueous electrolyte secondary battery according to Embodiment 1 of the present invention, as viewed from the positive active material layer side;
Fig. 8 is a cross-sectional view schematically illustrating a positive electrode of a nonaqueous electrolyte secondary battery according to Modification Example 1 from Embodiment 1 of the present invention;
Fig. 9 is a plan view schematically illustrating the positive electrode of the nonaqueous electrolyte secondary battery according to Modification Example 1 from Embodiment 1 of the present invention, as viewed from the positive active material layer side;
Fig. 10 is a cross-sectional view schematically illustrating a power generating element of a nonaqueous electrolyte secondary battery according to Modification Example 2 from Embodiment 1 of the present invention;
Fig. 11 is a cross-sectional view schematically illustrating a positive electrode of the nonaqueous electrolyte secondary battery according to Modification Example 2 from Embodiment 1 of the present invention;
Fig. 12 is a plan view schematically illustrating the positive electrode of the nonaqueous electrolyte secondary battery according to Modification Example 2 from Embodiment 1 of the present invention, as viewed from the positive active material layer side;
Fig. 13 is a cross-sectional view schematically illustrating a positive electrode of a nonaqueous electrolyte secondary battery according to Modification Example 3 from Embodiment 1 of the present invention;
Fig. 14 is a plan view schematically illustrating the positive electrode of the nonaqueous electrolyte secondary battery according to Modification Example 3 from Embodiment 1 of the present invention, as viewed from the positive active material layer side;
Fig. 15 is a cross-sectional view schematically illustrating a power generating element of a nonaqueous electrolyte secondary battery according to Embodiment 2 of the present invention;
Fig. 16 is a plan view schematically illustrating a positive electrode of the nonaqueous electrolyte secondary battery according to Embodiment 2 of the present invention, as viewed from the positive active material layer side; and
Fig. 17 is a cross-sectional view schematically illustrating a power generating element according to a comparative example.

### DESCRIPTION OF EMBODIMENTS

An electric storage device according to an aspect of the present invention includes: a positive electrode; a negative electrode; and a separator placed between the positive electrode and the negative electrode, the positive electrode has a positive electrode substrate, a positive active material layer formed on the positive electrode substrate, and a protective layer that covers at least one of side surfaces in a width direction of the positive active material layer, the negative electrode has a negative electrode substrate and a negative active material layer formed on the negative electrode substrate, and the separator has a separator substrate opposed to the negative active material layer, and an inorganic layer containing a binder, which is formed on the separator substrate and opposed to the positive active material layer. Preferably, the inorganic layer is larger in width than the positive active material layer, and the protective layer is adapted to protect the positive active material layer from a component eluted from the binder.

With this configuration, the protective layer covers at least one of side surfaces in the width direction of the positive active material layer opposed to the separator, and the protective layer is adapted to cover the positive active material layer from a component eluted from the binder. For this reason, even when the binder constituting the separator is eluted from the separator to cause intensive decomposition at a portion, of the positive active material layer, covered with the protective layer, the reaction with the positive active material, etc. can be inhibited at the portion, of the positive active material layer, covered with the protective layer. Therefore, the influence of the binder elution can be reduced, and performance degradation of the electric storage device can be thus suppressed.

In the electric storage device, preferably, when the positive active material layer is projected onto the inorganic layer as viewed from the positive electrode substrate, the inorganic layer is exposed on both sides in the width direction, and the protective layer covers both side surfaces in the width direction of the positive active material layer.

In the electric storage device, preferably, when the positive active material layer is projected onto the inorganic layer as viewed from the positive electrode substrate, the inorganic layer is exposed only on one side in the width direction, and the protective layer covers only a side surface in the width direction of the positive active material layer, which is located on the exposed inorganic layer.

In these cases, the protective layer is formed in the area largely affected by the elution and decomposition of the binder in the positive active material layer, and an electric storage device can be thus achieved which undergoes suppressed performance degradation.

In the electric storage device described above, preferably, the binder is a binder with ester linkages.

The binder with ester linkages has high reactivity with the positive active material, and the advantageous effect of the present invention thus becomes more significant in the electric storage device including the separator which has the binder with ester linkages.

As described above, an electric storage device which can suppress performance degradation can be provided.

Embodiments of the present invention will be described below with reference to the drawings. It is to be noted that the same or corresponding parts are denoted by the same reference symbols in the following drawings, and descriptions of the parts will not be repeated.

### (Embodiment 1)

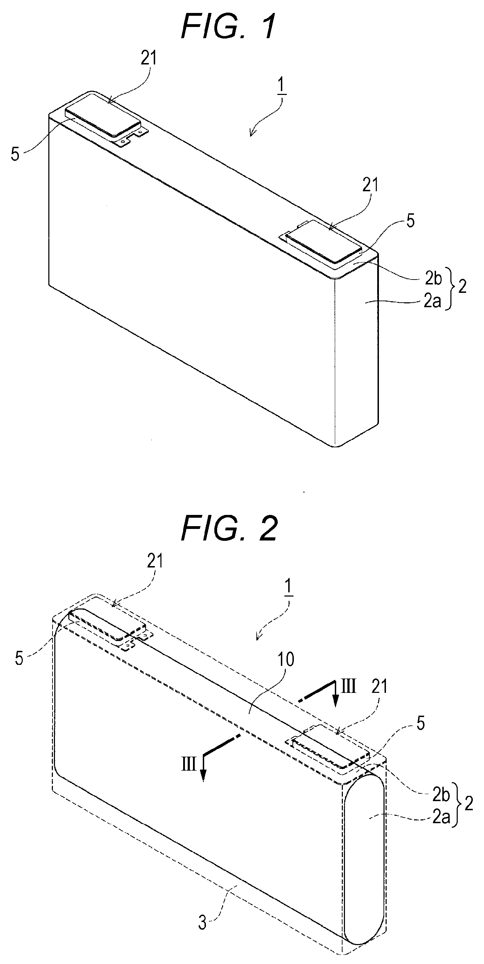

A nonaqueous electrolyte secondary battery 1 as an example of an electric storage device according to an embodiment of the present invention will be described with reference to Figs. 1 to 7.

As shown in Figs. 1 to 3, the nonaqueous electrolyte secondary battery 1 according to the present embodiment includes a container 2, an electrolyte solution (electrolyte) 3 housed in the container 2, external gaskets 5 attached to the container 2, a power generating element 10 housed in the container 2, and external terminals 21 electrically connected to the power generating element 10.

As shown in Fig. 1, the container 2 has a main body section (case) 2a for housing a power generating element 10, and a lid section 2b for covering the main body section 2a. The main body section 2a and the lid section 2b are formed from, for example, an aluminum-based metallic material such as aluminum or an aluminum alloy, or a stainless steel plate, and welded with each other.

The external gaskets 5 are placed on the external surface of the lid section 2b, with openings of the lid section 2b in communication with openings of the external gaskets 5. The external gaskets 5 have, for example, concave portions, and the external terminals 21 are placed in the concave portions.

The external terminals 21 are connected to a current-collecting section (not shown) connected to the power generating element 10. It is to be noted that the shape of the current-collecting section is not particularly limited, but in the form of, for example, a plate. The external terminals 21 are formed from, for example, an aluminum-based metallic material such as aluminum or an aluminum alloy.

The external gaskets 5 and the external terminals 21 are provided for a positive electrode and a negative electrode. The external gasket 5 and external terminal 21 for a positive electrode are placed on one end in a longitudinal direction of the lid section 2b, whereas the external gasket 5 and external terminal 21 for a negative electrode are placed on the other end in the longitudinal direction of the lid section 2b.

As shown in Fig. 2, the electrolyte solution 3 is housed within the main body section 2a, where the power generating element 10 is immersed in the electrolyte solution 3. More specifically, the power generating element 10 and the electrolyte solution 3 are encapsulated within the main body section 2a.

The electrolyte solution 3 (nonaqueous electrolyte) is obtained by dissolving an electrolyte salt in an organic solvent.

Examples of the organic solvent include non-aqueous solvents such as, for example, ethylene carbonate, propylene carbonate, butylene carbonate, trifluoropropylene carbonate, y-butyrolactone, y-valerolactone, sulfolane, 1,2-dimethoxyethane, 1,2-diethoxyethane, tetrahydrofurane, 2-methyltetrahydrofurane, 2-methyl-1,3-dioxolan, dioxolan, fluoroethyl methyl ether, ethylene glycol diacetate, propylene glycol diacetate, ethylene glycol dipropionate, propylene glycol dipropionate, methyl acetate, ethyl acetate, propyl acetate, butyl acetate, methyl propionate, ethyl propionate, propyl propionate, dimethyl carbonate, diethyl carbonate, ethyl methyl carbonate, methyl propyl carbonate, ethyl propyl carbonate, dipropyl carbonate, methyl isoproopyl carbonate, ethyl isoproopyl carbonate, diisopropyl carbonate, dibutyl carbonate, acetonitrile, fluoroacetonitrile, alkoxy- and halogen-substituted cyclic phosphazenes or chain phosphazenes such as ethoxypentafluorocyclotriphosphazene, diethoxytetrafluorocyclotriphosphazene, and phenoxypentafluorocyclotriphosphazene, phosphate esters such as triethyl phosphate, trimethyl phosphate, and trioctyl phosphate, borate esters such as triethyl borate and tributyl borate, N-methyloxazolidinone, and N-ethyloxazolidinone.

In the case of using a solid electrolyte as the electrolyte, a polymer solid electrolyte is used as the solid electrolyte, and a porous polymer solid electrolyte film can be used as the polymer solid electrolyte. The polymer solid electrolyte can further contain therein an electrolyte solution. Alternatively, in the case of using a gel-like polymer solid electrolyte as the electrolyte, the electrolyte solution constituting the gel may be different from the electrolyte solution contained in pores, etc. However, when high power is required such as in HEV applications, it is more preferable to use a nonaqueous electrolyte alone than to use a solid electrolyte or a polymer solid electrolyte.

The electrolyte salt is not particularly limited, but examples thereof include ionic compounds such as LiClO₄, LiBF₄, LiAsF₆, LiPF₆, LiCF₃SO₃, LiN(SO₂CF₃)₂, LiN(SO₂C₂F₅)₂, LlN(SO₂CF₃)(SO₂C₄F₉), LiSCN, LiBr, LiI, Li₂SO₄, Li₂B₁₀Cl₁₀, NaClO₄, NaI, NaSCN, NaBr, KClO₄ and KSCN, and mixtures of two or more of the compounds.

Known additives may be further added to the nonaqueous electrolyte.

The nonaqueous electrolyte of the organic solvent and electrolyte salt combined can be used in the electric storage device 10. It is to be noted that a mixture of propylene carbonate, dimethyl carbonate, and methyl ethyl carbonate is preferred as the nonaqueous electrolyte, in terms of lithium ion conductivity increased.

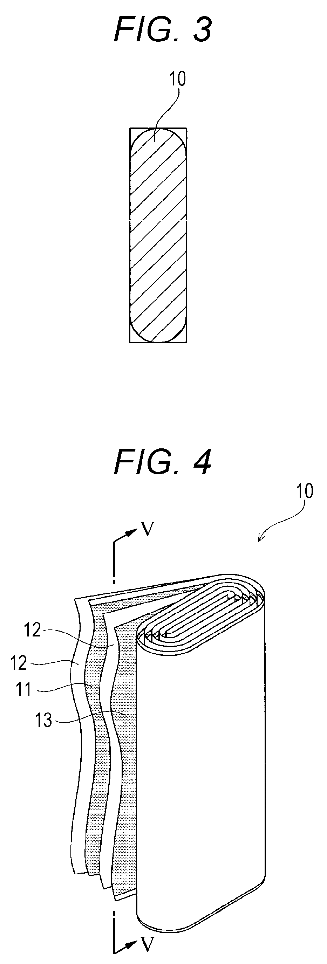

As shown in Figs. 2 and 3, the power generating element 10 is housed within the main body section 2a.

In the container 2, a power generating element may be housed, or a plurality of power generating elements may be housed (not shown). In the latter case, the plurality of power generating elements 10 are electrically connected in parallel.

As shown in Fig. 4, the power generating element 10 includes a positive electrode 11, a separator 12, and a negative electrode 13. The power generating element 10 according to the present embodiment is rolled (wound) into the form of a cylinder, with the separator 12 placed on the negative electrode 13, the positive electrode 11 placed on the separator 12, and the separator 12 placed on the positive electrode 11. More specifically, the power generating element 10 has the separator 12 formed on the outer periphery of the negative electrode 13, the positive electrode 11 formed on the outer periphery of the separator 12, and the separator 12 formed on the outer periphery of the positive electrode 11. In the present embodiment, the power generating element 10 has the insulating separator placed between the positive electrode 11 and the negative electrode 13, and thus the positive electrode 11 and the negative electrode 13 are not electrically connected to each other.

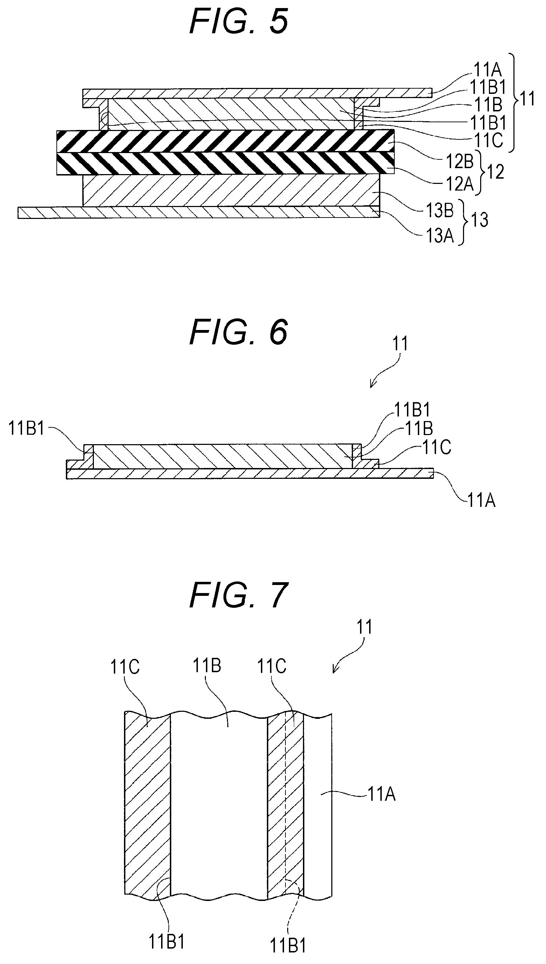

As shown in Fig. 5, the positive electrode 11 constituting the power generating element 10 has a positive electrode substrate 11A; a positive active material layer 11B formed on the positive electrode substrate 11A; and a protective layer 11C for covering at least one of side surfaces (end surfaces of the positive active material layer 11B in the winding axis direction) 11B1 of the positive active material layer 11B in the width direction.

The negative electrode 13 constituting the power generating element 10 has a negative electrode substrate 13A, and a negative active material layer 13B formed on the negative electrode substrate 13A.

The separator 12 constituting the power generating element 10 has a separator substrate 12A, and an inorganic layer 12B formed on the separator substrate 12A. The separator substrate 12A of the separator 12 is opposed to the negative active material layer 13B, whereas the inorganic layer 12B thereof is opposed to the positive active material layer 11B.

More specifically, the power generating element 10 has the separator 12 provided between the positive electrode 11 and the negative electrode 13. In addition, the negative active material layer 13B of the negative electrode 13 is opposed in contact with the separator substrate 12A of the separator 12. In addition, the positive active material layer 11B and protective layer 11C of the positive electrode 11 are opposed in contact with the inorganic layer 12B of the separator 12. The power generating element 10 is obtained by rolling the configuration described above.

It is to be noted that the negative active material layer may be formed on the both sides of the negative electrode substrate 13A, whereas the positive active material layer may be formed on the both sides of the positive electrode substrate 11A.

The positive electrode substrate 11A and the negative electrode substrate 13A are not particularly limited, but aluminum can be used as the material of the positive electrode substrate 11A. Copper can be used as the material of the negative electrode substrate 13A. The positive electrode substrate 11A and the negative electrode substrate 13A typically have the form of foil.

The positive active material layer 11B constituting the positive electrode 11 includes a positive active material, a conducting aid, and a binder. The negative active material layer 13B constituting the negative electrode 13 includes a negative active material and a binder. It is to be noted that the negative active material layer 13B may further include a conducting aid.

As the positive active material, known materials can be used appropriately, as long as the materials are positive active materials capable of storing and releasing lithium ions. For example, the positive active material can be selected from among composite oxides (e.g., LiₓCoO₂, LiₓNiO₂, LiₓMn₂O₄, LiₓMnO₃, LiₓNi_{y}Co_{(1-y)}O₂, LiₓNi_{y}Mn_{z}Co_{(1-y-z)}O₂, LiₓNi_{y}Mn_{(2-y)}O₄) represented by LiₓMO_{y} (M represents at least one transition metal), or polyaniline compounds (e.g., LiFePO₄ LiMnPO₄, LiNiPO₄, LiCoPO₄, Li₃V₂(PO₄)₃, Li₂MnSiO₄, Li₂CoPO₄F) represented by Li_{w}Meₓ(XO_{y})_{z} (Me represents at least one transition metal, and X is, for example, P, Si, B, or V). In addition, the elements in the compounds or moieties of the polyanilines may be substituted with other elements or anion species. In addition, the surface of the positive active material may be coated with metal oxides such as ZrO₂, MgO, and Al₂O₃, or with carbon. Examples of the positive active material further include, but not limited to, conductive polymer compounds such as disulfide, polypyrrole, polyaniline, polyparastyrene, polyacetylene, and polyacene materials, and carbonaceous materials of pseudographite structure.

In the positive active material, these compounds may be used singly, or two or more of the compounds may be used in mixture.

The negative active material is a material which can contribute to electrode reactions of charge and discharge reactions in the negative electrode. The material of the negative active material is not particularly limited, but carbonaceous materials can be used, such as, for example, amorphous carbon, non-graphitizable carbon, graphitizable carbon, and graphite.

The conducting aid mentioned above is not particularly limited, and for example, ketjen black, acetylene black, graphite, coke powders, etc. can be used.

The binder mentioned above is not particularly limited, and for example, polyacrylonitrile, polyvinylidene fluoride (PVDF), copolymers of vinylidene fluoride and hexafluoropropylene, polytetrafluoroethylene, polyhexafluoropropylene, polyethylene oxide, polypropylene oxide, polyphosphazene, polysiloxane, polyvinyl acetate, polyvinyl alcohol, polymethylmethacrylate, polyacrylic acid, polymethacrylic acid, styrene-butadiene rubbers, nitrile-butadiene rubbers, polystyrene, and polycarbonate can be used.

The protective layer 11C constituting the positive electrode 11 will be described later.

The separator 12 is placed between the positive electrode 11 and the negative electrode 13, and intended to allow the passage of the electrolyte solution 3 while blocking the electrical connection between the positive electrode 11 and the negative electrode 13. From the perspective of preventing short circuit, the separator 12 is larger in width than the positive active material layer 11B. Furthermore, the separator 12 according to the present embodiment is larger in width than the negative active material layer 13B.

The separator 12 has the separator substrate 12A, and the inorganic layer 12B formed on at least one surface of the separator substrate 12A. The inorganic layer 12B has only little contact with the protective layer 11C, and thus exhibits an improved tolerance to expansion and contraction during a charge-discharge cycle, thereby making it possible to suppress the decrease in capacity.

The separator substrate 12A is not particularly limited, but general resin porous films can be used, and woven or non-woven fibers can be used which have, for example, polymers, natural fibers, hydrocarbon fibers, glass fibers or ceramic fibers. The separator substrate 12A preferably has woven or non-woven polymer fibers, and more preferably, has polymer woven or fleece, or is such woven or fleece. The separator substrate 12A as polymer fibers preferably has non-conductive fibers of a polymer selected from polyesters such as polyacrylonitrile (PAN), polyamide (PA), and polyethylene terephthalate (PET), polyolefins (PO) such as polypropylene (PP) and polyethylene (PE), or mixtures of such polyolefins. In addition, the separator substrate 12A is a polyolefin microporous film, a non-woven fabric, paper, or the like, and is preferably a polyolefin microporous film (porous polyolefin layer). Polyethylene, polypropylene, or a composite film thereof can be used as the porous polyolefin layer.

The inorganic layer 12B is also referred to as an inorganic coating layer, which includes inorganic particles and a binder. The inorganic layer 12B is larger in width than the positive active material layer 11B. More specifically, the inorganic layer 12B covers the entire region of the positive active material layer 11B projected (imaginary projected) onto the inorganic layer 12B, as viewed from the positive electrode substrate 11A. While there is no particular limit the inorganic layer 12B is larger in width than the positive electrode substrate 11A, the inorganic layer 12B is preferably 1 mm or more larger in width than the positive electrode substrate 11A from the perspective of preventing short circuit.

The inorganic particles are not particularly limited, but preferably composed of one or more inorganic substances alone from the following, or composed of a mixture or a composite compound of the substances. Specifically, examples of the substances include: oxide microparticles such as iron oxides, SiO₂, Al₂O₃, TiO₂, BaTiO₂, ZrO, alumina-silica composite oxides; nitride microparticles such as aluminum nitride and silicon nitride; poorly-soluble ionic crystal microparticles such as calcium fluoride, barium fluoride, and barium sulfate; covalent crystal microparticles such as silicon and diamond; clay microparticles such as talc and montmorillonite; and substances derived from mineral resources such as boehmite, zeolite, apatite, kaolin, mullite, spinel, olivine, sericite, bentonite, mica, or artificial substances thereof. In addition, microparticles may be adopted which are provided with electrical insulation by treating the surfaces of conductive microparticles such as: metal microparticles; oxide microparticles such as SnO₂ and tin-indium oxides (ITO); and carbonaceous microparticles such as carbon black and graphite, with an electrically insulating material (for example, the above-mentioned materials constituting electrically insulating inorganic particles). The inorganic particles are preferably SiO₂, Al₂O₃, or alumina-silica composite oxides.

As the binder, the same binder as those of the positive electrode 11 and negative electrode 13 can be used. The binder is preferably a compound having an ester linkage in a molecule. The binder having an ester linkage is excellent in terms of thermal stability and cost. For example, rubbers such as methacrylate ester-acrylate ester copolymers, styrene-acrylate ester copolymers, acrylonitrile-acrylate ester copolymers, polyvinyl acetate, resins which have a melting point and/or a glass transition temperature of 180°C or higher, such as polyester, etc. can be used as such a binder having an ester linkage.

In addition, binders which are able to bind the inorganic particles to the positive electrode substrate 11A and the negative electrode substrate 13A, not dissolved in the electrolyte solution, and electrochemically stable in the range of use in lithium ion secondary batteries are preferred as the binder mixed with the inorganic particles.

Preferred as the binder is at least one selected from the group consisting of: polyvinylidene fluoride (PVdF); fluorine-containing resins such as polytetrafluoroethylene; styrene butadiene rubbers (SBR); acrylic resins (having an ester linkage in a molecule); polyolefin resins; polyvinyl alcohol; nitrogen-containing resins such as polyamide, polyimide, and polyamideimide; cross-linked polymers of cellulose and acrylamide and cross-linked polymers of cellulose and chitosan pyrrolidone carboxylate; and polysaccharide polymers such as chitosan and chitin, which are cross-linked with a cross-linking agent.

It is to be noted that the separator substrate 12A and the inorganic layer 12B may be composed of single layers, or composed of multiple layers.

Now, the protective layer 11C will be described which constitutes the positive electrode 11. The protective layer 11C is adapted to protect the positive active material layer 11B from a component eluted from the binder of the inorganic layer 12B. The term "to protect" means that the contact or adhesion with the positive active material layer 11B inhibits the direct reaction of the component eluted from the binder with the positive active material on the positive active material.

For example, conductive materials such as ketjen black, acetylene black, graphite, and coke powders, inorganic powders such as Al₂O₃, SiO₂, ZrO₂, TiO₂, and MgO, and organic particles such as polyimide powders can be used as the constituent material of the protective layer 11C.

The constituent material of the protective layer 11C is preferably Al₂O₃ particles in terms of safety, stability, handling ability, etc., and particularly preferably γ-alumina particles from the viewpoints of adhesion and joint strength to the positive electrode plate in the form of foil, etc. It is to be noted that the protective layer 11C contains no positive active material.

As the particles in the protective layer 11C, particles can be used which have a median value of 1 nm to 2000 nm in terms of primary particle size. The particles preferably have a median value of 1 nm to 200 nm, more preferably 1 nm to 20 nm in terms of primary particle size, from the viewpoints of adhesion and joint strength to the positive electrode plate in the form of foil.

As the binder mixed with the electrically insulating particles described above, polyvinylidene fluoride (PVDF), polyimide, polyamideimide, etc. can be used, but it is preferable to use PVDF from the viewpoints of adhesion and joint strength to the positive electrode substrate 11A in the form of foil.

The thickness of the protective layer 11C can be appropriately varied depending on the thickness of the positive active material layer 11B.

The thickness of the protective layer 11C is preferably -14 µm or more and +2 µm or less, more preferably 0 µm or more and +1 µm or less, with respect to the thickness of the positive active material layer 11B.

The protective layer 11C of +2 µm or less in thickness with respect to the thickness of the positive active material layer 11B suppresses an increase in the interelectrode distance between the positive electrode and the negative electrode around the protective layer 11C in the case of rolling up, as compared with around the other parts. Accordingly, due to the suppressed generation of parts with the interelectrode distance increased, disordered current distributions can be suppressed during highly efficient charge-discharge, and the generation of non-uniform deterioration can be suppressed.

The protective layer 11C of -14 µm or more in thickness with respect to the thickness of the positive active material layer 11B can provide a more adequate protective effect at the side surfaces of the positive active material layer 11B.

As shown in Fig. 5, as viewed from the positive electrode substrate 11A, when the positive active material layer 11B is projected (imaginary projected) onto the inorganic layer 12B, in the case of the inorganic layer 12B exposed on both sides in the width direction, the protective layer 11C preferably covers the side surfaces 11B1 on both sides in the width direction of the positive active material layer 11B, more preferably covers the entire side surfaces 11B1 on the both sides in the width direction of the positive active material layer 11B. When the protective layer 11C covers the entire side surfaces 11B1 in the width direction of the positive active material layer 11B, the side surfaces 11B1 of the positive active material layer 11B are not exposed.

The cross-sectional shape of the protective layer 11C shown in Fig. 5 is substantially L-shaped. More specifically, the protective layer 11C extends along the both side surfaces 11B1 in the width direction of the positive active material layer 11B, and extend outwardly along the surface of the positive electrode substrate 11A opposed to the positive active material layer 11B.

Subsequently, a method will be described for manufacturing the nonaqueous electrolyte secondary battery 1 according to the present embodiment.

First, the power generating element 10 will be described.

### <Preparation of Positive Electrode>

A positive active material, a conducting aid, and a binder are mixed, and this mixture is added to a solvent, and subjected to mixing to form a positive composite. This positive composite is applied to at least one surface of the positive electrode substrate 11A, and subjected to compression molding. This prepares the formation of the positive active material layer 11B on the positive electrode substrate 11A.

Next, as shown in Figs. 5 to 7, the material to serve as the protective layer 11C is applied so as to cover at least one of the side surfaces 11B1 in the width direction of the positive active material layer 11B, and subjected to compression molding. In the present embodiment, the material to serve as the protective layer 11C is applied so as to entirely cover the both side surfaces 11B1 in the width direction of the positive active material layer 11B, and subjected to compression molding. Then, vacuum drying is carried out. Thus, as shown in Figs. 6 and 7, the positive electrode 11 is prepared which has the positive electrode substrate 11A, the positive active material layer 11B, and the protective layer 11C.

### <Preparation of Negative Electrode>

A negative active material containing hard carbon and a binder are mixed, and this mixture is added to a solvent, and subjected to mixing to form a negative composite. This negative composite is applied to at least one surface of the negative electrode substrate 13A, and subjected to drying, and then to compression molding. Thus, the negative electrode 13 is prepared which has the negative active material layer 13B formed on the negative electrode substrate 13A.

### <Preparation of Separator>

For the separator 12, the separator substrate 12A is prepared, and a coating agent is formed on the separator substrate 12A to prepare the inorganic layer 12B.

Specifically, the separator substrate 12A is prepared, for example, as follows. A low-density polyethylene and a plasticizer are mixed, and subjected to melt mixing in an extruder equipped with a T-die on an end to form a sheet. This sheet is immersed in a solvent such as diethyl ether to extract and remove the plasticizer, and dried to obtain an unstretched porous film. This porous film is biaxially stretched in a heated tank, and then subjected to heat treatment to prepare the separator substrate 12A.

The inorganic layer 12B is prepared, for example, as follows. Inorganic particles such as alumina particles, a binder, a thickener such as CMC are mixed into a solvent such as ion-exchange water, and further mixed with a surfactant to form a coating agent. In this step of preparing the inorganic layer 12B, it is preferable to use a binder having an ester linkage.

Next, the coating agent is applied by, for example, a gravure method to the separator substrate 12A, and dried. Thus, the separator 12 is prepared which has the separator substrate 12A, and the inorganic layer 12B formed on the separator substrate 12A. It is to be noted that the surface of the separator substrate 12A may be subjected to modification treatment. In this step, the inorganic layer 12B is formed so as to be larger in width than the positive active material layer 11B.

### <Preparation of Power Generating Element (Electrode Body)>

Next, the positive electrode 11 and the negative electrode 13 are rolled with the separator 12 interposed therebetween. Specifically, the separator 12 is placed on the negative electrode 13 so that the negative active material layer 13B is opposed to the separator substrate 12A, the positive electrode 11 is placed on the separator 12 so that the inorganic layer 12B is opposed to the positive active material layer 11B, and the inorganic layer 12B is placed so as to be exposed on both sides in the width direction, when the positive active material layer 11B is projected onto the inorganic layer 12B, as viewed from the positive electrode substrate 11A. In this state, rolling-up is performed, and the power generating element 10 is thereby prepared. Then, a current-collecting section is attached to each of the positive electrode and negative electrode.

### <Preparation of Nonaqueous Electrolyte Secondary Battery>

Next, the power generating element 10 is placed inside the main body section 2a of the container 2. In the case of a plurality of power generating elements 10, for example, the power generating element 10 with current-collecting sections electrically connected in parallel are placed inside the main body section 2a. Then, the current-collecting sections are each welded with the external terminal 21 in the gasket 5 of the lid section 2b, and the lid section 2b is attached to the main body section 2a.

Next, the electrolyte solution filling is carried out. The electrolyte solution is not particularly limited, but for example, LiPF₆ is prepared in a mixed solvent of propylene carbonate (PC) : dimethyl carbonate (DMC) : ethylmethyl carbonate (EMC) = 3 : 2 : 5 (volume ratio). However, known additives may be further added. In accordance with the steps described above, the nonaqueous electrolyte secondary battery 1 according to the present embodiment is prepared as shown in Figs. 1 to 7.

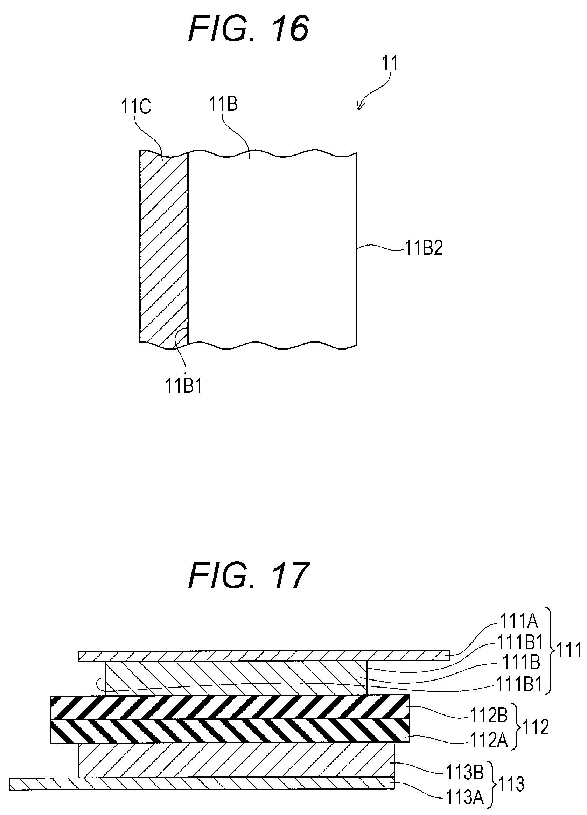

Subsequently, advantageous effects of the nonaqueous electrolyte secondary battery 1 according to the present embodiment will be described as compared with a nonaqueous electrolyte secondary battery according to a comparative example as shown in Fig. 17.

The nonaqueous electrolyte secondary battery according to the comparative example as shown in Fig. 17 differs from the nonaqueous electrolyte secondary battery according to the present embodiment shown in Fig. 5, in that the protective layer 11C is not provided. When the nonaqueous electrolyte secondary battery according to the comparative example is placed under a high-temperature and high-pressure environment, a binder will be eluted from an inorganic layer 112B of a separator 112 to cause intensive decomposition at side surfaces 111B1 in the width direction of a positive active material layer 111B. In this case, the generation of locally deteriorated regions in the positive active material layer 111B leads to degraded performance of the nonaqueous electrolyte secondary battery according to the comparative example.

On the other hand, the nonaqueous electrolyte secondary battery 1 according to the present embodiment includes the positive electrode 11, the negative electrode 13, and the separator 12 placed between the positive electrode 11 and the negative electrode 13, the positive electrode 11 has the positive electrode substrate 11A, the positive active material layer 11B formed on the positive electrode substrate 11A, and the protective layer 11C for covering at least one of the side surfaces 11B1 in the width direction of the positive active material layer 11B, the negative electrode 13 has the negative electrode substrate 13A and the negative active material layer 13B formed on the negative electrode substrate 13A, the separator 12 has the separator substrate 12A opposed to the negative active material layer 13B, and the inorganic layer 12B containing the binder, which is formed on the separator substrate 12A and opposed to the positive active material 11B, the inorganic layer 12B is larger in width than the positive active material layer 11B, and the protective layer 11C is adapted to protect the positive active material layer 11B from a component eluted from the binder.

In the nonaqueous electrolyte secondary battery 1 according to the present embodiment, the area largely affected when the binder constituting the separator 12 is eluted from the separator 12 to cause breakdown is the side surfaces 11B1 in the width direction of the positive active material layer 11B. The area at least partially has the protective layer 11C formed for protecting the positive active material layer 11B from the component eluted from the binder. For this reason, the component eluted from the binder in the inorganic layer 12B of the separator 12 is decomposed on the protective layer 11C and the positive electrode substrate 11A, and the reaction with the positive active material, etc. can be thus inhibited. Therefore, the influence of binder elution can be reduced, and performance degradation of the nonaqueous electrolyte secondary battery 1 can be thus suppressed.

As just described, the nonaqueous electrolyte secondary battery 1 according to the present embodiment can suppress performance degradation, even when the inorganic layer 12B is larger in width than the positive active material layer 11B. For this reason, the nonaqueous electrolyte secondary battery 1 according to the present embodiment can be used as a nonaqueous electrolyte secondary battery of 4 Ah or more in a preferred manner.

In addition, as in the present embodiment, when the positive active material layer 11B is projected onto the inorganic layer 12B as viewed from the positive electrode substrate 11A, in the case of the inorganic layer 12B exposed on both sides in the width direction, the protective layer 11C preferably covers both side surfaces in the width direction of the positive active material layer 11B. The area largely affected by the elution and decomposition of the binder in the positive active material layer 11B has the protective layer 11C formed, and performance degradation can be thus suppressed for the nonaqueous electrolyte secondary battery 1.

In addition, the advantageous effect is particularly significant when the binder is a binder with an ester linkage in the nonaqueous electrolyte secondary battery 1 according to the present embodiment.

Nonaqueous electrolyte secondary batteries according to Modification Examples 1 to 3 of Embodiment 1 of the present invention will be described below.

The nonaqueous electrolyte secondary batteries according to Modification Examples 1 to 3 fundamentally have the same configuration as the nonaqueous electrolyte secondary battery according to Embodiment 1 as described above, but differs in the shape of the protective layer 11C.

### (Modification Example 1)

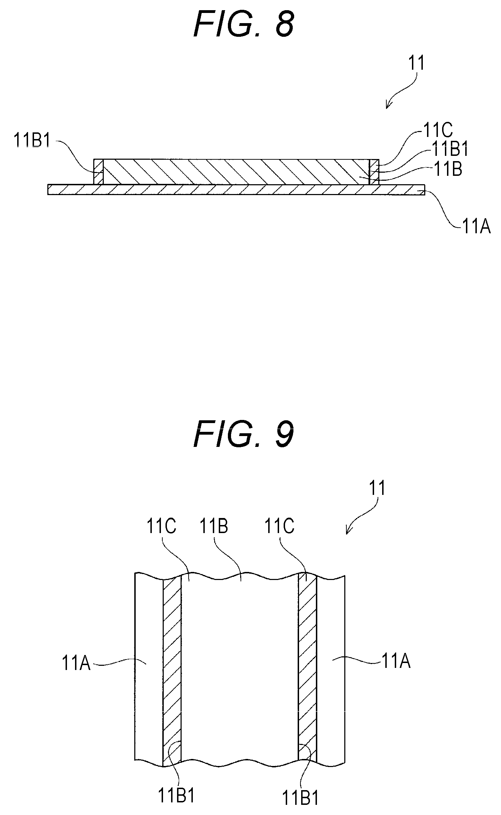

As shown in Figs. 8 and 9, in the nonaqueous electrolyte secondary battery according to Modification Example 1, the protective layer 11C extends entirely along the both side surfaces 11B1 in the width direction of the positive active material layer 11B. In the case of Modification Example 1, the amount of the protective layer 11C applied can be reduced.

### (Modification Example 2)

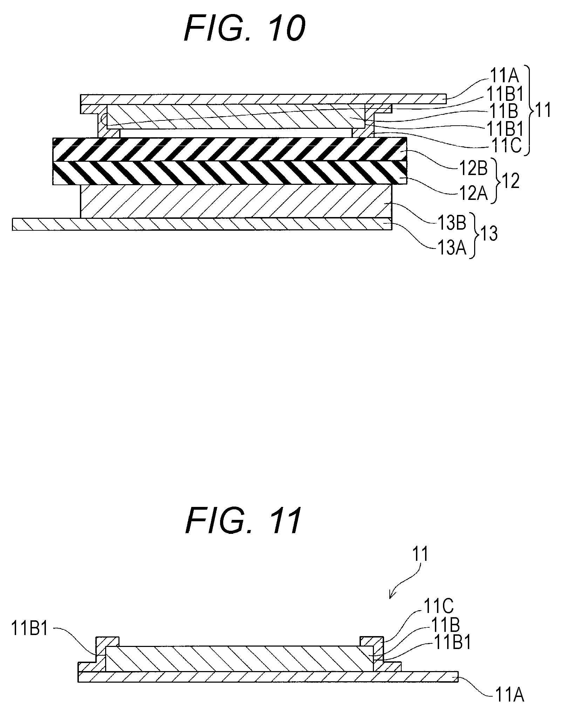

As shown in Figs. 10 to 12, the cross-sectional shape of the protective layer 11C is substantially Z-shaped in the nonaqueous electrolyte secondary battery according to Modification Example 2. Specifically, the protective layer 11C extends along the both side surfaces 11B1 in the width direction of the positive active material layer 11B, and has one end extending inwardly along the surface of the positive active material layer 11B opposed to the inorganic layer 12B, and the other end outwardly extending along the surface of the positive electrode substrate 11A opposed to the positive active material layer 11B.

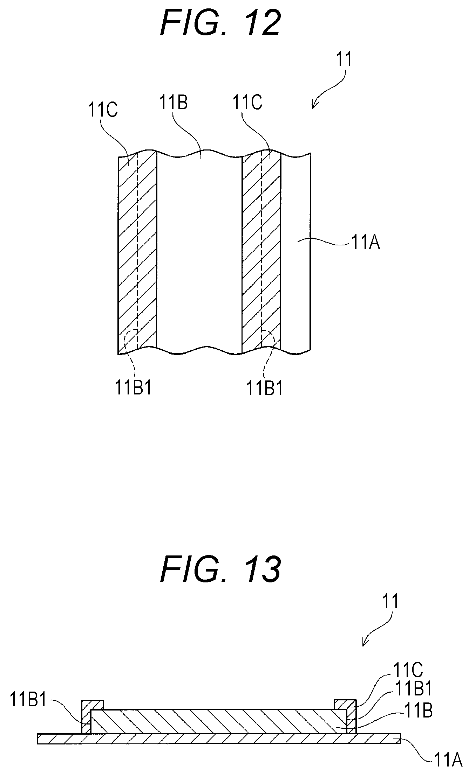

As shown in Figs. 11 and 12, in a method of manufacturing the nonaqueous electrolyte secondary battery according to Modification Example 2, after forming the positive active material layer 11B on the positive electrode substrate 11A, the protective layer 11C is formed along the rolling up direction over the area from the exposed positive electrode substrate 11A to portions of the positive active material layer 11B in the width direction. In the case of Modification Example 2, the protective layer 11C can be easily formed.

### (Modification Example 3)

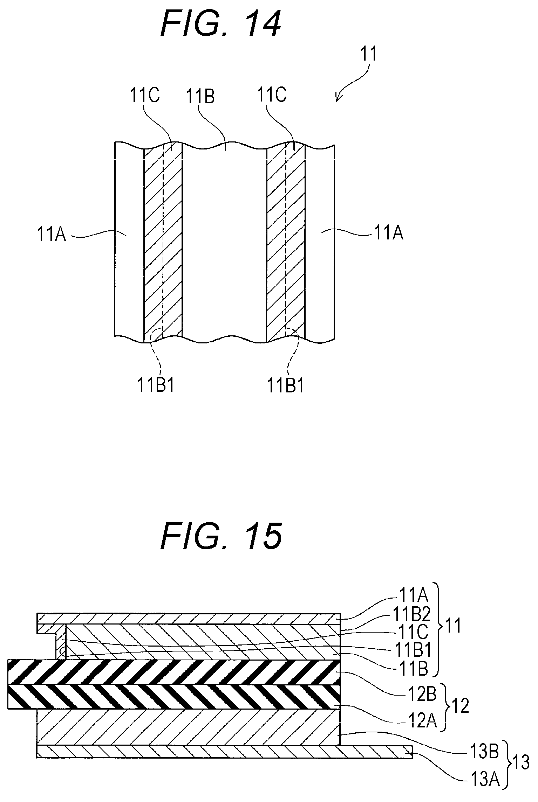

As shown in Figs. 13 and 14, in the nonaqueous electrolyte secondary battery according to Modification Example 3, the cross-sectional shape of the protective layer 11C extends along the both side surfaces 11B1 in the width direction of the positive active material layer 11B, and has one end extending inwardly along the surface of the positive active material layer 11B opposed to the inorganic layer 12B. Also in the case of Modification Example 3, the protective layer 11C can be easily formed.

### (Embodiment 2)

A nonaqueous electrolyte secondary battery according to Embodiment 2 of the present invention will be described with reference to Figs. 15 and 16. The nonaqueous electrolyte secondary battery according to Embodiment 2 fundamentally has the same configuration as the nonaqueous electrolyte secondary battery 1 according to Embodiment 1, but differs in the way that when the positive active material layer 11B is projected onto the inorganic layer 12B as viewed from the positive electrode substrate 11A, the inorganic layer 12B is exposed only on one side in the width direction, and the protective layer 11C covers only the side surface 11B1 in the width direction of the positive active material layer 11B, which is located on the exposed inorganic layer 12B.

Specifically, one end in the width direction of the inorganic layer 12B is projected from one end (side surface 11B1) in the width direction of the positive active material layer 11B, and the other end (side surface 11B2) in the width direction of the positive active material layer 11B is located flush with the other end in the width direction of the inorganic layer 12B. In the present embodiment, the other ends of the positive electrode substrate 11A, positive active material layer 11B, inorganic layer 12B, separator substrate 12A, negative active material layer 13B, and negative electrode substrate 13A in the width directions thereof are located flush with each other.

The protective layer 11C is formed only on the side surface 11B1 located on one side in the width direction of the positive active material layer 11B, whereas the protective layer 11C is not formed on the side surface 11B2 located on the other side in the width direction of the positive active material layer 11B.

A method of manufacturing the nonaqueous electrolyte secondary battery according to the present embodiment is implemented fundamentally as in the case of the method of manufacturing the nonaqueous electrolyte secondary battery according to Embodiment 1, but different in the step of preparing the positive electrode 11 and the step of preparing the power generating element 10.

In the step of preparing the positive electrode 11, the protective layer 11C is formed which covers only the side surface 11B1 in the width direction of the positive active material layer 11B, which is located on one side.

The step of preparing the power generating element 10 is implemented, for example, as follows. The separator 12 is placed on the negative electrode 13, the positive electrode 11 is placed on the separator 12, and the arrangement is adapted so that the inorganic layer 12B is exposed only on one side (only on the side with the protective layer 11C formed) in the width direction, when the positive active material layer 11B is projected onto the inorganic layer 12B as viewed from the positive electrode substrate 11A. In this state, the positive electrode 11 and the negative electrode 13 are rolled with the separator 12 interposed therebetween.

As described above, in the nonaqueous electrolyte secondary battery according to the present embodiment, when the positive active material layer 11B is projected onto the inorganic layer 12B as viewed from the positive electrode substrate 11A, the inorganic layer 12B is exposed only on one side in the width direction, and the protective layer 11C covers only the side surface 11B1 in the width direction of the positive active material layer 11B, which is located on the exposed inorganic layer 12B (on one side).

When the positive active material layer 11B is projected onto the inorganic layer 12B as viewed from the positive electrode substrate 11A, the side surface 11B2 of the positive active material layer 11B, which is located on the other side in the width direction where the inorganic layer 12B is not exposed, is less likely to be affected by the elution and decomposition of the binder. In the nonaqueous electrolyte secondary battery according to the present embodiment, the protective layer 11C is not formed on the side surface 11B2 located on the other side which is less likely to be affected by the elution and decomposition of the binder, whereas the protective layer 11C is formed in the area of the positive active material layer 11B affected by the elution and decomposition of the binder. For this reason, performance degradation can be suppressed for the nonaqueous electrolyte secondary battery, and the area with the protective layer 11C formed can be reduced.

While explanations have been given herein with reference to examples of the nonaqueous electrolyte secondary battery as the electric storage device in Embodiment 1, the modification examples thereof, and Embodiment 2, the present invention is not limited to the nonaqueous electrolyte secondary battery, but applicable to, for example, electric storage devices such as capacitors. When the present invention is used as a nonaqueous electrolyte secondary battery, a lithium ion secondary battery is used in a preferred manner. When the present invention is used as a capacitor, a lithium ion capacitor or an ultracapacitor is used in a preferred manner. Furthermore, the present invention is applicable to not only electric storage devices including roll-type power generating elements, but also electric storage devices including laminate-type power generating elements.

An electric storage module may be configured by combining a plurality of the electric storage devices.

The embodiments of the present invention have been described, while it is also contemplated from the beginning that features of the respective embodiments and modification examples are appropriately combined. In addition, the embodiments disclosed herein by way of example in all respects are not to be considered limiting. The scope of the present invention is specified by the appended claims, but not by the embodiments described above, and intended to encompass all modifications within the meaning and scope equivalent to the claims.

## Claims

1. An electric storage device (10) comprising:
a positive electrode (11);
a negative electrode (13); and
a separator (12) placed between the positive electrode (11) and the negative electrode (13),
wherein the positive (11) electrode includes a positive electrode substrate (11A), a positive active material layer (11B) formed on the positive electrode substrate (11A), and a protective layer (11C) that covers at least one of side surfaces (11B1) in a width direction of the positive active material layer (11B),
the negative electrode (13) includes a negative electrode substrate (13A) and a negative active material layer (13B) formed on the negative electrode substrate (13A), and
the separator (12) includes a separator substrate (12A) opposed to the negative active material layer (13B), **characterised by** an inorganic layer (12B) containing a binder, the inorganic layer (12B) formed on the separator substrate (12A) and opposed to the positive active material layer (11B),
wherein the protective layer (11C) is adapted to protect the positive active material layer (11B) from a component eluted from the binder contained in the inorganic layer (12B).

2. The electric storage device (10) according to claim 1, wherein the inorganic layer (12B) is larger in width than the positive active material layer (11B).

3. The electric storage device (10) according to claim 1 or 2, wherein when the positive active material layer (11B) is projected onto the inorganic layer (12B) as viewed from the positive electrode substrate (11A), the inorganic layer (12B) is exposed on both sides in a width direction, and
the protective layer (11C) covers both side surfaces (11B1) in the width direction of the positive active material layer (11B).

4. The electric storage device (10) according to claim 1 or 2, wherein when the positive active material layer (11B) is projected onto the inorganic layer (12B) as viewed from the positive electrode substrate (11A), the inorganic layer (12B) is exposed only on one side in a width direction, and
the protective layer (11C) covers only a side surface (11B1) in the width direction of the positive active material layer (11B), the side surface (11B1) located on the exposed inorganic layer (12B).

5. The electric storage device (10) according to any one of claims 1 to 4, further comprising an electrolyte solution.

6. The electric storage device (10) according to any one of claims 1 to 5, wherein a solvent of the electrolyte solution comprises at least one or more from among non-aqueous solvents such as ethylene carbonate, propylene carbonate, butylene carbonate, trifluoropropylene carbonate, γ-butyrolactone, γ-valerolactone, sulfolane, 1,2-dimethoxyethane, 1,2-diethoxyethane, tetrahydrofurane, 2-methyltetrahydrofurane, 2-methyl-1,3-dioxolan, dioxolan, fluoroethyl methyl ether, ethylene glycol diacetate, propylene glycol diacetate, ethylene glycol dipropionate, propylene glycol dipropionate, methyl acetate, ethyl acetate, propyl acetate, butyl acetate, methyl propionate, ethyl propionate, propyl propionate, dimethyl carbonate, diethyl carbonate, ethyl methyl carbonate, methyl propyl carbonate, ethyl propyl carbonate, dipropyl carbonate, methyl isoproopyl carbonate, ethyl isoproopyl carbonate, diisopropyl carbonate, dibutyl carbonate, acetonitrile, fluoroacetonitrile, alkoxy- and halogen-substituted cyclic phosphazenes or chain phosphazenes such as ethoxypentafluorocyclotriphosphazene, diethoxytetrafluorocyclotriphosphazene, and phenoxypentafluorocyclotriphosphazene, phosphate esters such as triethyl phosphate, trimethyl phosphate, and trioctyl phosphate, borate esters such as triethyl borate and tributyl borate, N-methyloxazolidinone, and N-ethyloxazolidinone.

7. The electric storage device (10) according to any one of claims 1 to 6, wherein the binder is a binder having an ester linkage.

8. The electric storage device (10) according to any one of claims 1 to 7, wherein the binder comprises a rubber such as a methacrylate ester-acrylate ester copolymer, a styrene-acrylate ester copolymer, acrylonitrile-acrylate ester copolymers, polyvinyl acetate, or a resin with a melting point and/or a glass transition temperature of 180°C or higher, such as polyester.

9. The electric storage device (10) according to any one of claims 1 to 8, wherein the binder comprises at least one selected from the group consisting of polyvinylidene fluoride (PVdF); fluorine-containing resins such as polytetrafluoroethylene; styrene butadiene rubbers (SBR); acrylic resins (having an ester linkage in a molecule); polyolefin resins; polyvinyl alcohol; nitrogen-containing resins such as polyamide, polyimide, and polyamideimide; cross-linked polymers of cellulose and acrylamide and cross-linked polymers of cellulose and chitosan pyrrolidone carboxylate; and polysaccharide polymers such as chitosan and chitin, which are cross-linked with a cross-linking agent.

10. The electric storage device (10) according to any one of claims 1 to 9, wherein the protective layer (11C) comprises a conductive material such as ketjen black, acetylene black, graphite, and coke powders.

11. The electric storage device (10) according to any one of claims 1 to 10, wherein the protective layer (11C) comprises inorganic particles such as Al₂O₃, SiO₂, ZrO₂, TiO₂, and MgO.

12. The electric storage device (10) according to any one of claims 1 to 10, wherein the protective layer (11C) comprises organic particles such as polyimide powders.

13. The electric storage device (10) according to any one of claims 1 to 12, wherein the protective layer (11C) comprises, as a binder, polyvinylidene fluoride (PVDF), polyimide, or polyamideimide.

14. An electric storage module comprising the electric storage device (10) according to any one of claims 1 to 13.

## Patentansprüche

1. Elektrische Speichervorrichtung (10), die Folgendes umfasst:
eine positive Elektrode (11);
eine negative Elektrode (13); und
einen Separator (12), der zwischen der positiven Elektrode (11) und der negativen Elektrode (13) angeordnet ist,
wobei die positive Elektrode (11) Folgendes enthält: ein Positivelektrodensubstrat (11A), eine positive Aktivmaterialschicht (11B), die auf dem Positivelektrodensubstrat (11A) ausgebildet ist, und eine Schutzschicht (11C), die mindestens eine von Seitenflächen (11B1) in einer Breitenrichtung der positiven Aktivmaterialschicht (11B) bedeckt,
die negative Elektrode (13) ein Negativelektrodensubstrat (13A) und eine negative Aktivmaterialschicht (13B), die auf dem Negativelektrodensubstrat (13A) ausgebildet ist, enthält, und
der Separator (12) ein Separatorsubstrat (12A) gegenüber der negativen Aktivmaterialschicht (13B) enthält,
**gekennzeichnet durch** eine anorganische Schicht (12B), die ein Bindemittel enthält, wobei die anorganische Schicht (12B) auf dem Separatorsubstrat (12A) und gegenüber der positiven Aktivmaterialschicht (11B) ausgebildet ist,
wobei die Schutzschicht (11C) dafür ausgelegt ist, die positive Aktivmaterialschicht (11B) vor einer Komponente zu schützen, die aus dem in der anorganischen Schicht (12B) enthaltenen Bindemittel eluiert.

2. Elektrische Speichervorrichtung (10) nach Anspruch 1, wobei die anorganische Schicht (12B) eine größere Breite hat als die positive Aktivmaterialschicht (11B).

3. Elektrische Speichervorrichtung (10) nach Anspruch 1 oder 2, wobei, wenn die positive Aktivmaterialschicht (11B), mit Blick von dem Positivelektrodensubstrat (11A), auf die anorganische Schicht (12B) projiziert wird, die anorganische Schicht (12B) auf beiden Seiten in einer Breitenrichtung frei liegt, und die Schutzschicht (11C) beide Seitenflächen (11B1) in der Breitenrichtung der positiven Aktivmaterialschicht (11B) bedeckt.

4. Elektrische Speichervorrichtung (10) nach Anspruch 1 oder 2, wobei, wenn die positive Aktivmaterialschicht (11B), mit Blick von dem Positivelektrodensubstrat (11A), auf die anorganische Schicht (12B) projiziert wird, die anorganische Schicht (12B) nur auf einer einzigen Seite in einer Breitenrichtung frei liegt, und
die Schutzschicht (11C) nur eine Seitenfläche (11B1) in der Breitenrichtung der positiven Aktivmaterialschicht (11B) bedeckt, wobei sich die Seitenfläche (11B1) auf der frei liegenden anorganischen Schicht (12B) befindet.

5. Elektrische Speichervorrichtung (10) nach einem der Ansprüche 1 bis 4, die des Weiteren eine Elektrolytlösung umfasst.

6. Elektrische Speichervorrichtung (10) nach einem der Ansprüche 1 bis 5, wobei ein Lösemittel der Elektrolytlösung mindestens eines oder mehrere aus Folgendem enthält: nicht-wässrige Lösemittel, wie zum Beispiel Ethylencarbonat, Propylencarbonat, Butylencarbonat, Trifluorpropylencarbonat, γ-Butyrolacton, γ-Valerolacton, Sulfolan, 1,2-Dimethoxyethan, 1,2-Diethoxyethan, Tetrahydrofuran, 2-Methyltetrahydrofuran, 2-Methyl-1,3-dioxolan, Dioxolan, Fluorethylmethylether, Ethylenglycol-Diacetat, Propylenglycoldiacetat, Ethylenglycol-Dipropionat, Propylenglycol-Dipropionat, Methylacetate, Ethylacetat, Propylacetat, Butylacetat, Methylpropionat, Ethylpropionat, Propylpropionat, Dimethylcarbonat, Diethylcarbonat, Ethylmethylcarbonat, Methylpropylcarbonat, Ethylpropylcarbonat, Dipropylcarbonat, Methylisopropylcarbonat, Ethylisopropylcarbonat, Diisopropylcarbonat, Dibutylcarbonat, Acetonitril, Fluoracetonitril, Alkoxy- und Halogen-substituierte zyklische Phosphazene oder Kettenphosphazene, wie zum Beispiel Ethoxypentafluorcyclotriphosphazen, Diethoxytetrafluorcyclotriphosphazen, und Phenoxypentafluorcyclotriphosphazen, Phosphatester, wie zum Beispiel Triethylphosphat, Trimethylphosphat, und Trioctylphosphat, Boratester, wie zum Beispiel Triethylborat und Tributylborat, N-methyloxazolidinon, und N-ethyloxazolidinone.

7. Elektrische Speichervorrichtung (10) nach einem der Ansprüche 1 bis 6, wobei das Bindemittel ein Bindemittel mit einer Esterbindung ist.

8. Elektrische Speichervorrichtung (10) nach einem der Ansprüche 1 bis 7, wobei das Bindemittel enthält: einen Gummi, wie zum Beispiel ein Methacrylatester-Acrylateester-Copolymer, ein Styrol-Acrylateester-Copolymer, Acrylnitril-Acrylatester-Copolymere, Polyvinylacetat, oder ein Harz mit einem Schmelzpunkt und/oder einer Glasübergangstemperatur von 184 °C oder höher, wie zum Beispiel Polyester.

9. Elektrische Speichervorrichtung (10) nach einem der Ansprüche 1 bis 8, wobei das Bindemittel mindestens eines enthält, das aus folgender Gruppe ausgewählt ist: Polyvinylidenfluorid (PVdF); Fluorin-haltige Harze, wie zum Beispiel Polytetrafluorethylen; Styrolbutadienkautschuk-Arten (SBR); Acryharze (mit einer Esterbindung in einem Molekül); Polyolefinharze; Polyvinylalkohol; Stickstoff-haltige Harze, wie zum Beispiel Polyamid, Polyimid und Polyamidimid; vernetzte Polymere von Cellulose und Acrylamid und vernetzte Polymere von Cellulose und Chitosan-Pyrrolidon-Carboxylat; und Polysaccharidpolymere, wie zum Beispiel Chitosan und Chitin, die mit einem Vernetzer vernetzt sind.

10. Elektrische Speichervorrichtung (10) nach einem der Ansprüche 1 bis 9, wobei die Schutzschicht (11C) ein leitfähiges Material enthält, wie zum Beispiel Ketjenblack, Acetylen-Black, Graphit, und Kokspulver.

11. Elektrische Speichervorrichtung (10) nach einem der Ansprüche 1 bis 10, wobei die Schutzschicht (11C) anorganische Partikel enthält, wie zum Beispiel Al₂O₃, SiO₂, ZrO₂, TiO₂ und MgO.

12. Elektrische Speichervorrichtung (10) nach einem der Ansprüche 1 bis 10, wobei die Schutzschicht (11C) organische Partikel enthält, wie zum Beispiel Polyimid-Pulver.

13. Elektrische Speichervorrichtung (10) nach einem der Ansprüche 1 bis 12, wobei die Schutzschicht (11C) als ein Bindemittel Polyvinylidenfluorid (PVDF), Polyimid oder Polyamidimid enthält.

14. Elektrisches Speichermodul, das die elektrische Speichervorrichtung (10) nach einem der Ansprüche 1 bis 13 umfasst.

## Revendications

1. Dispositif d'accumulation électrique (10) comprenant :
une électrode positive (11) ;
une électrode négative (13) ; et
un séparateur (12) placé entre l'électrode positive (11) et l'électrode négative (13),
dans lequel l'électrode positive (11) comprend un substrat d'électrode positive (11A), une couche de matériau actif positive (11B) formée sur le substrat d'électrode positive (11A), et une couche protectrice (11C) qui couvre au moins une des surfaces latérales (11B1) dans une direction de largeur de la couche de matériau actif positive (11B),
l'électrode négative (13) comprend un substrat d'électrode négative (13A) et une couche de matériau actif négative (13B) formée sur le substrat d'électrode négative (13A), et
le séparateur (12) comprend un substrat de séparateur (12A) opposé à la couche de matériau actif négative (13B) **caractérisé par**
une couche inorganique (12B) contenant un liant, la couche inorganique (12B) formée sur le substrat de séparateur (12A) et opposée à la couche de matériau actif positive (11B)
dans lequel la couche protectrice (11C) est adaptée pour protéger la couche de matériau actif positive (11B) d'un composant élué du liant contenu dans la couche inorganique (12B).

2. Dispositif d'accumulation électrique (10) selon la revendication 1, dans lequel la couche inorganique (12B) est plus large que la couche de matériau actif positive (11B).

3. Dispositif d'accumulation électrique (10) selon la revendication 1 ou 2, dans lequel, lorsque la couche de matériau actif positive (11B) est projetée sur la couche inorganique (12B) comme vu à partir du substrat d'électrode positive (11A), la couche inorganique (12B) est exposée sur les deux côtés dans une direction de largeur, et
la couche protectrice (11C) couvre les deux surfaces latérales (11B1) dans la direction de largeur de la couche de matériau actif positive (11B).

4. Dispositif d'accumulation électrique (10) selon la revendication 1 ou 2, dans lequel la couche de matériau actif positive (11B) est projetée sur la couche inorganique (12B) comme vu à partir du substrat d'électrode positive (11A), la couche inorganique (12B) est exposée seulement sur un côté dans la direction de largeur, et
la couche protectrice (11C) couvre seulement une surface latérale (11B1) dans la direction de largeur de la couche de matériau actif positive (11B), la surface latérale (11B1) étant située sur la couche inorganique exposée (12B).

5. Dispositif d'accumulation électrique (10) selon l'une quelconque des revendications 1 à 4, comprenant en outre une solution d'électrolyte.

6. Dispositif d'accumulation électrique (10) selon l'une quelconque des revendications 1 à 5, dans lequel un solvant de la solution d'électrolyte comprend au moins un ou plusieurs parmi les solvants non aqueux tels que le carbonate d'éthylène, le carbonate de propylène, le carbonate de butylène, le carbonate de trifluoropropylène, la γ-butyrolactone, la γ-valérolactone, le sulfolane, le 1,2-diméthoxyéthane, le 1,2-diéthoxyéthane, le tétrahydrofurane, le 2-méthyltétrahydrofurane, le 2-méthyl-1,3-dioxolane, le dioxolane, le fluoroéthyl méthyl éther, le diacétate d'éthylène glycol, le diacétate de propylène glycol, le dipropionate d'éthylène glycol, le dipropionate de propylène glycol, l'acétate de méthyle, l'acétate d'éthyle, l'acétate de propyle, l'acétate de butyle, le propionate de méthyle, le propionate d'éthyle, le propionate de propyle, le carbonate de diméthyle, le carbonate de diéthyle, le carbonate d'éthylméthyle, le carbonate de méthylpropyle, le carbonate d'éthylpropyle, le carbonate de dipropyle, le carbonate de méthylisopropyle, le carbonate d'éthylpropyle, le carbonate de dipropyle, le carbonate de méthylisopropyle, le carbonate d'éthylisopropyle, le carbonate de diisopropyle, le carbonate de dibutyle, l'acétonitrile, le fluoroacétonitrile, des phosphazènes cycliques substitués par un alcoxy et un halogène ou des phosphazènes à chaîne tels que l'éthoxypentafluorocyclotriphosphazène, le diéthoxytétrafluorocyclotriphosphazène et le phénoxypentafluorocyclotriphosphazène, les esters de phosphate tels que le phosphate de triéthyle, le phosphate de triméthyle et le phosphate de trioctyle, les esters de borate tels que le borate de triéthyle et le borate de tributyle, la N-méthyloxazolidinone et la N-éthyloxazolidinone.

7. Dispositif d'accumulation électrique (10) selon l'une quelconque des revendications 1 à 6, dans lequel le liant est un liant ayant une liaison ester.

8. Dispositif d'accumulation électrique (10) selon l'une quelconque des revendications 1 à 7, dans lequel le liant comprend un caoutchouc tel qu'un copolymère ester de méthacrylate-ester d'acrylate, un copolymère styrène-ester d'acrylate, des copolymères acrylonitrile-ester d'acrylate, l'acétate polyvinylique, ou une résine avec un point de fusion et/ou une température de transition vitreuse de 180 °C ou plus, telle qu'un polyester.

9. Dispositif d'accumulation électrique (10) selon l'une quelconque des revendications 1 à 8, dans lequel le liant comprend au moins un choisi dans le groupe constitué par le fluorure de polyvinylidène (PVdF) ; les résines contenant du fluor telles que le polytétrafuoroéthylène ; les caoutchoucs de styrène butadiène (SBR) ; les résines acryliques (ayant une liaison ester dans une molécule) ; les résines polyoléfiniques ; l'alcool polyvinylique ; les résines contenant de l'azote telles que le polyamide, le polyimide et le polyamideimide ; les polymères réticulés de cellulose et d'acrylamide et les polymères réticulés de cellulose et de carboxylate de chitosan pyrrolidone ; et les polymères polysaccharidiques tels que le chitosan et la chitine, qui sont réticulés avec un agent de réticulation.

10. Dispositif d'accumulation électrique (10) selon l'une quelconque des revendications 1 à 9, dans lequel la couche protectrice (11C) comprend un matériau conducteur tel que le noir de ketjen, le noir d'acétylène, le graphite et les poudres de coke.

11. Dispositif d'accumulation électrique (10) selon l'une quelconque des revendications 1 à 10, dans lequel la couche protectrice (11C) comprend des particules inorganiques telles que Al₂O₃, SiO₂, ZrO₂, TiO₂ et MgO.

12. Dispositif d'accumulation électrique (10) selon l'une quelconque des revendications 1 à 10, dans lequel la couche protectrice (11C) comprend des particules organiques telles que les poudres de polyimide.

13. Dispositif d'accumulation électrique (10) selon l'une quelconque des revendications 1 à 12, dans lequel la couche protectrice (11C) comprend, comme liant, le fluorure de polyvinylidène (PVDF), le polyimide ou le polyamideimide.

14. Module d'accumulation électrique comprenant le dispositif d'accumulation électrique (10) selon l'une quelconque des revendications 1 à 13.
